# EUROPÄISCHE PATENTSCHRIFT

(11) **EP 2 566 746 B1**
(45) Veröffentlichungstag und Bekanntmachung des Hinweises auf die Patenterteilung: **13.06.2018**
(21) Anmeldenummer: 11717222.1
(22) Anmeldetag: 21.04.2011
(51) Int. Cl.: B62H 5/08, B62M 6/55, B62M 23/02

(54) **ANTRIEBSEINHEIT MIT SPERRMECHANISMUS UND VERFAHREN ZUR SPERRUNG EINER ANTRIEBSEINHEIT**
DRIVE UNIT WITH LOCKING MECHANISMUS TO LOCK THE DRIVE UNIT AND METHOD FOR LOCKING A DRIVE UNIT.
UNITE D'ASSISTANCE MOTRICE AVEC SYSTEME DE VERROUILLAGE ET METHODE DE VERROUILLAGE D'UNE UNITE D'ASSISTANCE MOTRICE.

(30) Priorität: 06.05.2010 DE 102010028648
(43) Veröffentlichungstag der Anmeldung: 13.03.2013
(73) Patentinhaber: Robert Bosch GmbH, 70442 Stuttgart (DE)
(72) Erfinder: SCHMIDT, Frank, 72108 Rottenburg (DE)
(86) Internationale Anmeldenummer: PCT/EP2011/056398
(87) Internationale Veröffentlichungsnummer: WO 2011/138175

(56) Entgegenhaltungen:
- EP-A1- 1 925 541
- CN-A- 101 181 914
- CN-Y- 2 771 072
- CN-Y- 200 957 854
- CN-Y- 201 198 337
- JP-A- H1 149 060
- JP-A- 2002 104 272
- US-A- 5 633 095
- US-A- 6 057 657
- US-A1- 2007 285 272

## Beschreibung

### Stand der Technik

Auf dem Gebiet der Erfindung, das Wegfahrsperren für Elektrofahrräder oder auch andere elektromotorisch betriebene Zweiräder (z.B. Elektro-Scooter) betrifft, sind externe mechanische Sperrmechanismen bekannt, mit denen das Elektrofahrrad durch mechanische Verbindung an feststehende Gegenstände oder durch mechanische Sperrung von Radkomponenten gesichert werden. Da die mechanischen Sperrelemente jedoch von außen zugänglich sind, besteht kein Schutz vor Manipulation.

Die CN 2 771 072 Y betrifft eine Wegfahrsperre für Elektrofahrräder. In einer Radnabe 2 befindet sich ein kleiner Motor 3 dessen Antriebsrad 4 mit einem Abtriebsrad 5 verkämmt. Das Abtriebsrad 5 ist relativ zu einem Zylinder 6 drehbar. Der Zylinder 6 weist einen Sperrmechanismus 63 auf, der zum Absperren in eine Welle 1 eines Antriebsmotors für das Fahrrad greifen kann, und ist mit dem Abtriebsrad 5 sowie einem Sperrring 7 verbunden. Der Motor 3 dient somit zum Betätigen des Sperrmechanismus 63. Die Welle 1 des Antriebsmotors durchdringt eine Radnabe 2 des Fahrrads. Diese Schrift offenbart nicht, dass eine elektrische Maschine der Antriebseinheit zum Antrieb eines Elektrofahrrads oder eines anderen elektromotorisch betriebenen Zweirads als auch ein Sperrmechanismus vollständig von einem Gehäuse umschlossen sind. Der nächstliegende bekanntgewordene Stand der Technik ist der CN 2 771 072 Y zu entnehmen. Die JP 2002-104272 A betrifft ein Elektrofahrrad, bei dem sich eine Antriebseinheit 13 und eine Batterie 20 innerhalb eines Gehäuses 8 befinden, das von drei Rahmenteilen 3a, 3b und 3c definiert wird.

Die CN 101 181 914 A betrifft eine Diebstahlsicherung für Fahrräder, bei der ein Steuerungsgehäuse 6 an einem Vorderrahmenteil 7 angebracht ist. Ferner ist ein Kodierungsschloss 14 vorgesehen.

Die CN 200 957 854 Y betrifft eine Diebstahlsicherung für ein Elektrofahrrad mit einem elektronischen Schloss, das eine elektromagnetische Kupplung ist.

Die CN 201198 337 Y betrifft ein Elektrofahrrad mit einer elektronischen Wegfahrsperre. Die elektronische Wegfahrsperre ist in dem Rahmen des Fahrrads vorgesehen.

Die US 6 057 657 A betrifft eine magnetisch betätigte Diebstahlsicherung für Fahrräder. Wie in Spalte 7, Zeilen 15-30 und in Spalte 10, Zeilen 20-50 beschrieben ist, befindet sich die Sperrvorrichtung in der Nabe des Rads.

Weiterhin sind für Elektrofahrräder Mechanismen bekannt, mit denen der elektrische Antrieb nicht angestellt werden kann, vgl. Internetseite www.my-ebike.de/sparta.php, die das Elektrofahrrad Nibur - Sparta ION beschreibt. Trotz der Sperrung kann das Elektrofahrrad beispielsweise verbracht werden oder einfach ohne elektrischen Antrieb benutzt werden. Es sind auch Verfahren bekannt, in welchen der Elektromotor elektrisch kurzgeschlossen wird, um so einen Wegfahrschutz zu gewährleisten.

Die Sperrmechanismen sind daher nicht geeignet, das Fahrrad vollständig zu schützen, es verbleibt immer eine Möglichkeit, entweder die zugänglichen Sperrmechanismen zu manipulieren oder zumindest das Fahrrad an einen Ort zu verbringen, an dem die Sperre durch Manipulation aufgehoben wird, ohne den Wert oder die Funktion des Fahrrads zu beeinträchtigen.

Es ist daher eine Aufgabe der Erfindung, einen Sperrmechanismus und ein Sperrverfahren vorzusehen, mit dem Elektrofahrräder besser vor Diebstahl geschützt werden können.

### Offenbarung der Erfindung

Diese Aufgabe wird gelöst durch die Antriebseinheit nach Anspruch 1 und das Verfahren nach Anspruch 4.

Ausgestaltungen der Erfindung sind Gegenstände der abhängigen Ansprüche. Das der Erfindung zugrunde liegende Konzept ist es, eine mechanische Sperre von außen unzugänglich in einem Gehäuse einer Antriebseinheit unterzubringen, wobei das Gehäuse alle zur Sperrung wesentlichen Komponenten umschließt. Diese wesentlichen Komponenten sind alle Komponenten, deren Manipulation zur Aufhebung der Sperre führen kann. Es ist daher vorgesehen, dass das Gehäuse der Antriebseinheit das Getriebe und der Motor umschließt. Das Gehäuse oder ein Teil hiervon kann in dem Fahrzeugrahmen integriert sein, d.h. stoffschlüssig oder mittels anderer mechanischer Verbindungen. Das Gehäuse selbst ist nicht mit üblichen Mitteln zu öffnen, bei der Verwendung von Schraubverbindungen, um Gehäuseteile zu verbinden, sind diese geschützt und nur mit proprietären Schlüsselformen zu öffnen. Vorzugsweise ist das Gehäuse hermetisch abgeschlossen. Dadurch ist gewährleistet, dass eine versuchte Manipulation zu bleibenden Schäden am Antrieb (zumindest am Gehäuse) führt, so dass aufgrund des damit verbundenen Wertverlustes eine Manipulation nicht lohnt. Vorzugsweise sind sämtliche Komponenten, mit denen die Sperrung aufgehoben werden kann, innerhalb des Gehäuses vorgesehen. Da ebenso der Motor in dem Gehäuse vorgesehen ist, kann auch eine Motorverbindung zwischen Getriebe und Motor nicht manipuliert werden, beispielsweise mit dem Manipulationsziel, den Motor zu aktivieren, um das Elektrofahrrad zu bewegen. Eine besondere Ausführungsform sieht vor, dass das Gehäuse mittels eines Gehäusedeckels zu öffnen ist, beispielsweise zur Wartung oder zum Einbau der Komponenten, dieser jedoch von dem Gehäuseinneren aus gesperrt werden kann. Alle Komponenten, deren Manipulation zur Öffnung des Gehäusedeckels führen kann, sind von dem Gehäuse vollständig umschlossen (wenn das Gehäuse mit dem Gehäusedeckel verschlossen ist).

Die Erfindung betrifft daher eine Antriebseinheit, die zum Antrieb eines Elektrofahrrads eingerichtet ist und mit diesem verbunden ist. Vorzugsweise sind alle manipulierbaren Verbindungselemente der Verbindung von Antriebseinheit und Elektrofahrrad, bsp. Schraubverbindungen oder andere lösbaren Verbindungselemente, innerhalb des Gehäuses vorgesehen. In die Antriebseinheit umfasst eine elektrische Maschine (bsp. ein DC-Motor), vorzugsweise mit Ansteuerelektronik, und ein Getriebe, das mit der elektrischen Maschine verbunden ist, die beide von dem Gehäuse umschlossen sind. Falls die Antriebseinheit ferner Kurbelantriebselemente umfasst, sind zumindest einige hiervon (bis auf Kurbel und Pedale) in dem Gehäuse untergebracht. Die Antriebseinheit umfasst einen Sperrmechanismus, der ebenso von dem Gehäuse vollständig umschlossen ist. Der Sperrmechanismus umfasst einen elektrischen Aktor und ein damit verbundenes und von dem Aktor angetriebenes Sperrelement. Das Sperrelement kann ein individuelles Maschinenelement sein, bsp. ein Riegel, oder kann ein mechanisch bewegtes Element des Aktors sein, beispielsweise ein magnetisch bewegter Anker oder ein magnetisches Element, auf das ein Magnetfeld bsp. einer Spule wirkt. Das Sperrelement ist gegenüber der elektrischen Maschine oder gegenüber dem Getriebe angeordnet, um in dieses in einer ersten Position einzugreifen, um bewegliche Teile der Maschine oder des Getriebes oder einer weiteren Antriebskomponente (beispielsweise eine Komponente des Pedalantriebs) an einer Bewegung zu hindern, die bei der Bewegung bzw. bei dem Antrieb des Fahrrads notwendigerweise bewegt werden. Beispielsweise kann das Sperrelement ein Sperrriegel, ein Sperrhaken oder eine Raste sein, die in ein Zahnrad der Maschine oder des Getriebes oder des Pedalantriebs eingreift und von diesem durch Betätigen des Aktors lösbar ist. Ferner kann das Sperrelement gegenüber einem Tretlagerelement (des Pedalantriebs) angeordnet sein, um dieses zu sperren, wobei das Tretlagerelement als Element einer Pedalantriebseinheit angesehen wird, die einen Teil der Antriebseinheit bildet, der von dem Gehäuse umschlossen ist. Das Sperrelement sowie das bewegliche Element des Antriebs (d.h. des Elektroantriebs oder des Pedalantriebs des Elektrofahrrads), das mittels des Sperrelements in seiner Bewegung gehindert wird, wenn der jeweilige Antrieb aktiv ist, sind von dem Gehäuse umschlossen. Die Komponente der elektrischen Maschine oder des Getriebes (oder des Pedalantriebs), mit dem das Sperrelement in Eingriff gebracht wird, wird durch das Sperrelement gesperrt.

Die vollständige Umschließung von für die Fortbewegung notwendigen Komponenten durch das Gehäuse verhindert eine Manipulation. Als vollständige Umschließung durch das Gehäuse wird auch eine Umschließung bezeichnet, die externe, begrenzte Öffnungen frei lässt, durch die beispielsweise ein elektrischer Anschluss, ein elektrischer Leiter oder eine mechanische Antriebsverbindung (bsp. die zum Antriebsrad führende Kette) führt.

Insbesondere betrifft die Erfindung Mittelantriebe von Fahrrädern, bei denen die elektrische Maschine über der Kurbel angeordnet ist.

Gemäß einer bevorzugten Ausführungsform umfasst das Gehäuse einen von dem Gehäuse lösbaren Gehäusedeckel, beispielsweise zur Wartung oder zum Einbau von Komponenten in das Gehäuse. Der Gehäusedeckel weist einen inneren Sperreingriff auf, der sich in dem Gehäuse erstreckt; das Gehäuse umschließt den Sperreingriff und trennt diesen von der Umgebung des Gehäuses. Das Sperrelement oder eine von dem Aktor angetriebene Gehäuseverschlusskomponente ist vorgesehen, um mit dem inneren Sperreingriff des Gehäusedeckels in Eingriff gebracht zu werde. Das Sperrelement (welches auch in Eingriff mit dem Getriebe und/oder der elektrischen Maschine und/oder einer Pedalantriebkomponenten gebracht werden kann), riegelt bei geschlossenem Gehäuse den Gehäusedeckel mittels Eingriff in den Sperreingriff ab. Alternativ riegelt bei geschlossenem Gehäuse die Gehäuseverschlusskomponente durch Eingriff in den Sperreingriff den Gehäusedeckel von innen ab. Die Abriegelung von Gehäusedeckel und Gehäuse kann durch lösbare, innere Verbindung von Gehäuse und Gehäusedeckel mittels eines Sperrriegels, einer Sperrraste oder einer Raste als Gehäuseverschlusskomponente vorgesehen werden.

Gemäß einer weiteren Ausführungsform der erfindungsgemäßen Antriebseinheit ist der Aktor (und das Sperrelement bzw. Gehäuseverschlusskomponente) als Öffner ausgeführt. Daher ist der Aktor eingerichtet, in stromlosem Zustand das Sperrelement in Eingriff mit der Komponente der elektrischen Maschine oder des Getriebes vorzusehen. Zudem ist der Aktor in stromlosem Zustand eingerichtet, den Gehäusedeckel in geschlossenem Zustand zu sperren. Eine spezifische Ausführungsform sieht einen zusätzlichen Gehäusedeckel-Verriegelungsaktor vor, der die Gehäuseverschlusskomponente antreibt. Ein derartiger zusätzlicher Gehäusedeckel-Verriegelungsaktor ist ebenso ein Öffner, der in stromlosem Zustand den Gehäusedeckel verriegelt, um das Gehäuse abzuschließen.

Vorzugsweise wird der Aktor auch bei Trennung der elektrischen Versorgung in seiner Position verbleiben, d.h. zwei mechanisch stabile Stellungen (entriegelt, verriegelt) vorweisen. Dadurch ist sichergestellt, dass durch Trennung der elektrischen Versorgung der Aktor nicht entriegelt und im anderen Fall bei Entladung der Batterie nicht ungewollt verriegelt.

Als weitere Eigenschaft können der Aktor und gegebenenfalls auch der Gehäusedeckel-Verriegelungsaktor mit einer Signalquelle vorgesehen sein, die einen aktuellen Schließzustand des entsprechenden Aktors wiedergibt, beispielsweise in Form eines binären Signals (offen/geschlossen). Die Signalquelle kann aktiv oder passiv sein, beispielsweise in Form eines elektrischen Kontakts, dessen elektrischer Widerstand den Schließzustand wiedergibt.

Eine Ausführungsform der Antriebseinheit sieht vor, dass diese ferner einen Antriebsakkumulator umfasst, der mit der elektrischen Maschine verbunden ist. Das Gehäuse umschließt den Antriebsakkumulator vollständig. Die Umschließung durch das Gehäuse (und den Gehäusedeckel) sieht vor, dass kein manipulativer Zugang von außen möglich ist, ohne das Gehäuse oder den Gehäusedeckel bleibend zu schädigen.

Gemäß einer Ausgestaltung der Erfindung, die einen gehobenen Bedienungskomfort erlaubt, umfasst die Antriebseinheit ferner eine mit dem Aktor verbundene Aktoransteuerelektronik. Die Aktoransteuerelektronik weist eine Codeverifikationseinheit auf. Die Codeverifikationseinheit ist mit einem elektrischen Anschluss oder mit einem Funk- oder IR-Empfänger zur Eingabe eines Codesignals ausgestattet. Bei Verwendung eines elektrischen Anschlusses weist das Gehäuse eine nach Außen führende Durchführung oder einen von Außen zugänglichen elektrischen Kontakt auf, der das Gehäuse durchbricht, oder eine optischen oder elektrischen Durchgang um entweder die Umgebung des Gehäuses optisch mit dem Gehäuseinneren zu verbinden, oder um einen Anschluss für einen externen IR-Sensor vorzusehen. Bei der Verwendung eines Funk-Empfängers umfasst dieser eine Antenne, die in dem Gehäuseinneren oder an der inneren Gehäusewand vorgesehen ist, wobei zumindest ein Teil des Gehäuses für Funkwellen (z.B. 27 MHz oder 433 MHz oder andere offene Bänder) durchlässig ausgebildet ist. Die Codeverifikationseinheit weist einen dort gespeicherten Code auf und ist eingerichtet, die durch den Empfänger oder elektrischen Anschluss empfangenen Signale mit dem Code zu vergleichen. Dekodiervorrichtungen, die selbst keinen Code explizit gespeichert haben, sondern die aufgrund ihrer Dekodierfunktion valide Codes von nicht validen Codes unterscheiden können, werden im Sinne der Erfindung als Codeverifikationseinheiten betrachtet, in denen ein Code gespeichert ist, wobei der gespeicherte Code in Form der Dekodierfunktion vorliegt.

Die Erfindung wird ferner realisiert durch ein Verfahren zur Sperrung einer Antriebseinheit eines Elektrofahrrads. Die Antriebseinheit ist in einem Gehäuse untergebracht, das dieses vollständig umschließt. Bei Empfang eines Schließsignals ein Sperrmechanismus, der ebenso in dem Gehäuse untergebracht ist, wird ein von einem Aktor des Sperrmechanismus angetriebenes Sperrelement des Sperrmechanismus in Eingriff mit einer Komponente einer elektrischen Maschine oder eines Getriebes gebracht. Die elektrische Maschine bzw. das Getriebe sind Teil der Antriebseinheit. Die Komponente wird von dem damit in Eingriff gebrachten Sperrmechanismus lösbar gesperrt. Ferner kann durch das Verfahren eine Komponente eines Pedalantriebs gesperrt werden, wobei zumindest die Komponente des Pedalantriebs (oder weitere bzw. alles Komponenten des Pedalantriebs) innerhalb des Gehäuses angeordnet sind. Die Komponente des Pedalantriebs wird als Teil der Antriebseinheit betrachtet, sowie als Komponente, in die das Sperrelement eingreift bzw. eingreifen kann.

Das Verfahren sieht ferner vor einen Gehäusedeckel des Gehäuses zu sperren, wobei der Gehäusedeckel vom Gehäuse lösbar ist. Der Gehäusedeckel wird gesperrt mittels eines inneren Sperreingriffs, in den das Sperrelement (das auch Antriebskomponenten sperrt) beim Sperren eingreift, um diesen gegenüber dem Gehäuse zu arretieren. Der Gehäusedeckel kann ferner durch eine (individuelle) Gehäuseverschlusskomponente gesperrt werden, die vom Aktor bewegt wird, um das Gehäuse, wenn dieses verschlossen ist, von innen abzuriegeln. Alternativ kann diese Gehäuseverschlusskomponente von einem Gehäusedeckel-Verriegelungsaktor beim Schließen betätigt bzw. bewegt werden.

In stromlosem Zustand sperrt der Aktor und das damit verbundene Sperrelement, indem das Sperrelement in stromlosem Zustand in Eingriff mit der Komponente der elektrischen Maschine oder des Getriebes oder des Pedalantriebs ist. Dies kann mittels Federvorspannung erreicht werden oder durch eine lösbare Schnappverbindung.

Die Gehäuseverschlusskomponente und der Gehäusedeckel-Verriegelungsaktor sperren ebenso bei stromlosem Zustand. Der Aktor und gegebenenfalls der Gehäusedeckel-Verriegelungsaktor sieht ein Signal vor, das einen Stellzustand des Sperrelements wiedergibt. Dies kann realisiert sein durch aktives Erzeugen eines Strom- oder Spannungssignals oder durch Vorsehen eines passiven Signals, beispielsweise ein Zustand einer elektrischen Verbindung bzw. deren elektrischer Widerstand, der abgefragt wird. Das Signal wird durch das Gehäuse hindurch abgegeben, bsp. über eine Durchleitung oder eine Funkverbindung (bei aktiver Signalerzeugung).

Das Verfahren kann in einer Ausführung, die einen erhöhten Bedienungskomfort vorsieht, mittels einer Aktoransteuerelektronik vorgesehen werden, die mit dem Aktor zur Ansteuerung des Aktors verbunden ist, und die von dem Gehäuse vollständig umschlossen ist. Die Aktoransteuerelektronik empfängt ein Codesignal auf elektrische Weise, über Funk oder über Infrarotübertragung . Die Aktoransteuerelektronik verifiziert das Codesignals anhand eines in der Aktoransteuerelektronik gespeicherten Codesignals. Bei positiver Verifizierung steuert die Aktoransteuerelektronik den Aktor zur Öffnung der Sperrung an. Die Verifizierung kann vorgesehen werden durch eine Dekodierung des empfangenen Signals mittels einer Dekodierungsfunktion der Aktoransteuerelektronik. Bei fehlgeschlagener Verifizierung eines Signals kann die Aktivierung des Aktors für eine Zeitspanne gesperrt werden, die mit wiederholten fehlgeschlagenen Verifizierungen mit deren Anzahl an Länge zunimmt. Die Zeitspanne wird (auf Null oder auf einen Mindestwert) zurückgesetzt, wenn eine positive Verifizierung erzielt wurde. Ferner können Signale unterdrückt werden, die Mindestanforderungen nicht erfüllen, um Sperrungen durch zufällige Störsignale zu vermeiden. Die Mindestanforderungen betreffen beispielsweise eine bestimmte Spektrumsform, beispielsweise das Vorliegen eines bestimmten Trägersignals.

Eine Ausführungsform mit weiterhin gesteigertem Bedienungskomfort sieht vor, eine Bewegung oder eine Betätigung des Elektrofahrrads mittels eines Bewegungs- oder Betätigungssensors zu erfassen. Wird die Bewegung oder Betätigung erfasst, wird ein Codeanfragesignal auf elektrische Weise, per Funk oder mittels Infrarotübertragung abgegeben, vorzugsweise von der Aktoransteuerelektronik bzw. einer Kommunikationskomponente hiervon. Ein mobiles Schlüsselelement erfasst das Codeanfragesignal und gibt auf diese Erfassung hin das Codesignal ab. Das Codesignal wird von der Ansteuerelektronik empfangen und verifiziert. Bei positiver Verifizierung wird durch Ansteuerung des Aktors mittels der Aktoransteuerelektronik die Sperrung geöffnet. Dies ermöglicht eine Aktivierung bzw. Öffnung des Sperrmechanismus, ohne spezifisch einen Schlüssel zu verwenden. Beispielsweise kann als Betätigungssensor ein Sensor verwendet werden, der das Auflegen einer Hand an den Sattel, den Rahmen oder den Lenker erfasst, bsp. kapazitiv. Ferner ist eine Betätigung des Pedals möglich, die von einem Pedalsensor erfasst wird. Diese Betätigung entspricht einem üblichen ersten Schritt vor der Benutzung des Elektrofahrrads. Die Betätigung führt zum Absenden einer Codeanfrage. Wenn der berechtigte Fahrer sich am Elektrofahrrad befindet, der das mobile Schlüsselelement trägt (bsp. in der Hosentasche), wird die Codeanfrage automatisch von dem mobilen Schlüsselelement erwidert, woraufhin die Sperrung automatisch nach Empfang des validen Codes, der von dem Schlüsselelement gesendet wird, aufgehoben wird. Es ist daher nicht erforderlich, das Schlüsselelement an eine bestimmte Stelle des Fahrrads zu führen, noch sind Codeeingaben erforderlich.

In einer alternativen Ausführungsform wird der Code an einer Eingabeschnittstelle des Elektrofahrrads eingegeben, entweder durch Bedienung von Tasten durch den Fahrer oder durch Übertragung eines Codesignals von einem (anderen) mobilen Schlüsselelement, das an die Eingabeschnittstelle temporär angeschlossen ist, an die Aktoransteuerelektronik. Ein derartiges mobiles Schlüsselelement weist keinen Empfänger auf, um eine Codeanfrage zu empfangen, sondern nur einen betätigbaren Codegenerator.

Ferner kann das Verfahren vorsehen, dass die Aktoransteuerelektronik regelmäßig, beispielsweise periodisch mit einer Frequenz von 1 Hz, oder einmal pro 10 oder 20 sec. eine Codeanfrage absendet. Wenn das Fahrrad abgestellt wird, so bleibt die Übertragung des Codes bzw. der Empfang der Anfrage aus, wenn der Fahrer und somit das mobile Schlüsselelement sich aus der Reichweite des Senders bzw. Empfängers bewegt. Dadurch wird das Fahrrad automatisch gesperrt, ohne weiteres zutun des Fahrer. Dies kann in der erfindungsgemäßen Antriebseinheit implementiert sein, indem die Aktoransteuerelektronik bzw. deren Codeverifikationseinheit einen Sender umfasst, der eingerichtet ist, periodisch eine Codeanfrage zu senden, vorzugsweise per Funk. Damit wird ferner ausgeschlossen, dass das Abschließen vom Fahrer vergessen wird, da durch die Entfernung des Fahrers das Elektrorad automatisch blockiert wird.

Die Erfindung wird ferner umgesetzt durch eines der oben beschriebenen Schlüsselelemente, in Hinblick auf Ihre Funktion komplementär zu der damit koppelbaren Aktoransteuerelektronik.

Der Code bzw. die Dekodierfunktion ist vorzugsweise permanent gespeichert in einem nicht-flüchtigen Speicher (bsp. ein festverdrahteter Speicher, bsp. ein gebrannter EPROM oder ein Flash-Speicher), um zu verhindern, dass sich der Code bei längerem Ausbleiben von elektrischer Spannung zurücksetzt oder die Aktoransteuerelektronik zurücksetzt, wodurch eine Manipulation möglich wäre. Alternativ oder in Kombination hierzu kann eine separate Pufferbatterie in der Antriebseinheit vorgesehen sein, die die Aktoransteuerelektronik oder zumindest die Speicher, die den Code halten, für längere Zeit mit Spannung versorgt, wenn der Antriebsakkumulator leer ist. Die Pufferbatterie versorgt vorzugsweise auch den Programmspeicher oder ggf. auch den Mikroprozessor, auf dem das Programm des Programmspeichers abläuft, längere Zeit mit Spannung. Die Versorgung durch die Pufferbatterie kann auf 1 oder 5 Jahre ausgelegt sein.

Während der Sperrmechanismus, der eine Komponente des Motors, des Getriebes oder des Pedalantriebs sperrt, in geöffnetem Zustand diese Komponenten vollständig freigibt, öffnet das Sperrelement bzw. die Gehäuseverschlusskomponente den Gehäusedeckel nicht automatisch. Vielmehr hält ein weiteres, vorzugsweise von außen betätigbares Element den Gehäusedeckel verriegelt, und eröffnet somit lediglich die Möglichkeit den Gehäusedeckel zu öffnen. Im verriegelten Zustand schließen das außen betätigbare Element sowie das Sperrelement bzw. die Gehäuseverschlusskomponente den Gehäusedeckel. Beide Verschlusskomponenten müssen geöffnet werden, um den Gehäusedeckel zu entfernen. Alternativ kann ein spezieller Code zur Öffnung des Gehäusedeckels vorgesehen sein, der sich von dem Code zur Öffnung der Sperre des Antriebs unterscheidet.

### Kurze Beschreibung der Figuren

Ausführungsbeispiele der Erfindung sind in der Figur dargestellt und werden in der nachfolgenden Beschreibung näher erläutert.

Es zeigt:

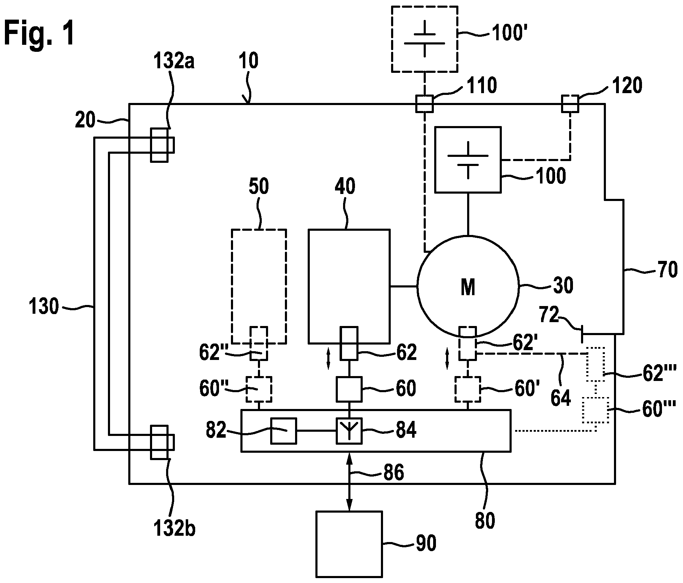

Figur 1 eine erfindungsgemäße Ausführung der Antriebseinheit incl. einiger spezifischer Ausführungsvarianten

### Ausführungsbeispiele

In Figur 1 ist eine Antriebseinheit 10 schematisch dargestellt, die ein Gehäuse 20 umfasst. Die Antriebseinheit 10 umfasst ferner eine elektrische Maschine 30, ein Getriebe 40 sowie Teile des Pedalantriebs 50, die jeweils in dem Gehäuse 20 angeordnet sind. Die Antriebseinheit 10 umfasst einen Sperrmechanismus, der einen elektrischen Aktor 60 und ein davon angetriebenes Sperrelement 62 umfasst. Alternative Sperrmechanismen sind gestrichelt dargestellt und umfassen jeweils einen elektrischen Aktor 60' bzw. 60" und ein davon angetriebenes Sperrelement 62' bzw. 62".

Das Sperrelement 62 kann von Aktor 60 in Eingriff mit einer Komponente des Getriebes 40 gebracht werden, das Sperrelement 62' kann von Aktor 60' in Eingriff mit einer Komponente des Motors 30 gebracht werden, und das Sperrelement 62" kann von Aktor 60" in Eingriff mit einer Komponente eines Teils des Pedalantriebs gebracht werden. Diese Komponenten sind Komponenten, die sich notwendigerweise drehen, wenn das Elektrofahrrad gefahren wird bzw. angetrieben wird. Als Teil des Pedalantriebs kann das Tretlager angesehen werden, das in dem Gehäuse vorgesehen ist (wobei das Gehäuse auch das Tretlagergehäuse umschließen kann oder ein Teil des Gehäuses 20 auch durch einen Abschnitt des Tretlagergehäuses gebildet sein kann).

Ein Gehäusedeckel 70 ist Teil des Gehäuses 20 und weist einen inneren Sperreingriff 72 auf, relativ zu dem eine Gehäuseverschlusskomponente 62'" (gestrichelt dargestellt) angeordnet ist. Diese kann über eine mechanische Verbindung 64 mit einem Sperrelement 62' verbunden sein, so dass der Aktor 60' sowohl Sperrelement 62' als auch Gehäuseverschlusskomponente 62'" betätigt. Der Gehäusedeckel 70 ist über ein innenliegendes Scharnier 74 mit dem Gehäuse 20 an einer Seite des Gehäusedeckels 70 verbunden, die dem inneren Sperreingriff 72 gegenüberliegt. Das Scharnier 74 ist wie der Sperreingriff 72 innerhalb des Gehäuses 20 und somit geschützt angeordnet.

In einer alternativen Ausführungsform (nicht dargestellt) werden das gleiche Sperrelement bzw. unterschiedliche Abschnitte des gleichen Sperrelements zum Eingriff in eine Komponente des Motors/des Getriebes/der Pedalantriebs und zum Eingriff in den inneren Sperreingriff verwendet. Grundsätzlich kann auch ein Aktor mehrere Sperrelemente betätigen, die in unterschiedliche Komponenten sperrend eingreifen, wenn die Antriebseinheit gesperrt wird.

Weiterhin kann, wie mit einer Punktlinie dargestellt ist, ein zusätzlicher Gehäusedeckel-Verriegelungsaktor 60'" vorgesehen sein, der die Gehäuseverschlusskomponente 62'" betätigt.

Alle Aktoren 60 - 60'" sind an eine Aktoransteuerelektronik 80 angeschlossen. Diese kann als Mikrocontroller mit zugehörigem Speicher und darin hinterlegtem Programm ausgebildet sein. Die Aktoransteuerelektronik 80 umfasst eine Codeverifikationseinheit 82, die mit einem Funkmodul 84 der Aktoransteuerelektronik 80 verbunden ist. Dadurch kann die Aktoransteuerelektronik 80 per Funkverbindung 86 Kontakt mit einem mobilen
Schlüsselelement 90 aufnehmen. Die Funkverbindung 86 ist vorzugsweise bidirektional oder semi-bidirektional. Das Funkmodul 84 kann dann eine Codeanfrage absenden, die über die Funkverbindung 86 in einer Richtung von dem mobilen Schlüsselelement 90 empfangen wird. Dieses übermittelt über die Funkverbindung 86 in entgegengesetzter Richtung den Code, der von der Codeverifikationseinheit 82 überprüft wird. Bei korrektem Code (positive Verifizierung) gibt die Codeverifikationseinheit 82 ein entsprechendes Signal ab, um die Aktoransteuerelektronik 80 zum Öffnen zu veranlassen, indem die Aktoren 60 - 60" oder auch 60"'entsprechend betätigt werden.

Die in Fig. 1 dargestellte Ausführungsform (durchgezogene Linien) umfasst einen Antriebsakkumulator 100, der in dem Gehäuse 20 untergebracht ist. Alternativ (gestrichelte Linie) umfasst das Gehäuse einen Energieanschluss 110, an den ein externer Antriebsakkumulator 100' anschließbar ist. Das Gehäuse umfasst ferner einen optionalen Ladeanschluss 120 (gestrichelt dargestellt), der mit dem internen Antriebsakkumulator 100 verbunden ist.

Das Gehäuse umfasst ferner Befestigungsmittel 130, um das Gehäuse an einem Elektrofahrrad (nicht dargestellt) befestigen zu können. Die schematisch dargestellten Befestigungsmittel 130 umfassen lösbare Komponenten in Form von Schraubverbindungen 132 a,b, die innerhalb des Gehäuses 20 angeordnet sind. Diese sind zum einen durch das Gehäuse 20 geschützt und erlauben zum anderen die Montage der Antriebseinheit 10 an ein Elektrofahrrad (nicht dargestellt). Die Befestigungsmittel erstrecken sich durch Öffnungen des Gehäuses 10 nach außen. Trotz dieser Öffnungen (und der Öffnungen 110, 120) sowie weiterer Öffnungen zum mechanischen Abtrieb und mechanischen Pedalantrieb (nicht dargestellt) umschließt das Gehäuse 20 die darin vorliegenden Elemente vollständig.

## Patentansprüche

1. Antriebseinheit eingerichtet zum Antrieb eines Elektrofahrrads oder eines anderen elektromotorisch betriebenen Zweirades, mit einer elektrischen Maschine (30), einem Getriebe (40) und einem Gehäuse (20), das die elektrischen Maschine (30) und das Getriebe (40) vollständig umschließt, wobei die Antriebseinheit (10) einen Sperrmechanismus (60-60", 62-62") umfasst, der ebenso von dem Gehäuse (20) vollständig umschlossen ist, wobei der Sperrmechanismus einen elektrischen Aktor (60-60") und eine damit verbundenes und von dem Aktor angetriebenes Sperrelement (62-62") umfasst, das eingerichtet ist, mit einer Komponente der elektrischen Maschine (30) oder des Getriebes (40) oder einer anderen Antriebskomponente (50) innerhalb des Gehäuses (20) in Eingriff gebracht zu werden und diese dadurch zu sperren,
**dadurch gekennzeichnet, dass**
der Aktor (60-60") eingerichtet ist, in stromlosem Zustand das Sperrelement (62-62") in Eingriff mit der Komponente der elektrischen Maschine (30) oder des Getriebes (40) oder der weiteren Antriebskomponenten (50) vorzusehen, und ferner eingerichtet ist, eine Signal abzugeben, das einen Stellzustand des Sperrelements (62-62") wiedergibt, und
die Antriebseinheit eine mit dem Aktor (60-60",60"') verbundene Aktoransteuerelektronik (80) umfasst, die eine Codeverifikationseinheit (82) aufweist, welche einen elektrischen Anschluss oder einen Funk- oder IR-Empfänger (84) zur Eingabe eines Codesignals aufweist, wobei die Aktoransteuerelektronik (80) und die Codeverifikationseinheit (82) vollständig von dem Gehäuse (20) umschlossen sind.

2. Antriebseinheit nach Anspruch 1, wobei das Gehäuse (20) einen von dem Gehäuse lösbaren Gehäusedeckel (70) umfasst, der einen inneren Sperreingriff (72) aufweist, wobei das Sperrelement oder eine von dem Aktor angetriebene Gehäuseverschlusskomponente (62"') eingerichtet ist, mit dem inneren Sperreingriff (72) des Gehäusedeckels (20) in Eingriff gebracht zu werden, um das Gehäuse (20), wenn dieses verschlossen ist, von innen abzuriegeln.

3. Antriebseinheit nach einem der vorangehenden Ansprüche, die ferner einen Antriebsakkumulator (100) umfasst, der mit der elektrischen Maschine (30) verbunden ist, wobei das Gehäuse (20) den Antriebsakkumulator (100) vollständig umschließt.

4. Verfahren zur Sperrung einer Antriebseinheit eines Elektrofahrrads, wobei die Antriebseinheit (10) in einem diese vollständig umschließende Gehäuse (20) untergebracht ist, bei Empfang eines Schließsignals ein Sperrmechanismus, der ebenso in dem Gehäuse untergebracht ist, wird ein von einem Aktor (60-60") des Sperrmechanismus angetriebenes Sperrelement (62-62") des Sperrmechanismus in Eingriff mit einer Komponente einer elektrischen Maschine (30) oder eines Getriebes (40) oder einer weiteren Antriebskomponente (50), die Teil der Antriebseinheit sind, gebracht, und die Komponente von dem damit in Eingriff gebrachten Sperrmechanismus lösbar gesperrt wird.
**dadurch gekennzeichnet, dass**
durch den Aktor (60-60") das Sperrelement (62-62") in stromlosem Zustand des Aktors in Eingriff mit der Komponente der elektrischen Maschine oder des Getriebes oder der weiteren Antriebskomponente (50) ist und die Komponente in stromlosem Zustand sperrt, und wobei der Aktor ferner ein Signal vorsieht, das einen Stellzustand des Sperrelements (62-62") wiedergibt, und
eine mit dem Aktor (60-60") verbundene Aktoransteuerelektronik (80), die von dem Gehäuse vollständig umschlossen ist, ein Codesignal auf elektrische Weise, über Funk oder über Infrarotübertragung empfängt, das Codesignals anhand eines in der Aktoransteuerelektronik (80) oder in einer Codeverifikationseinheit (82) der Aktoransteuerelektronik (80) gespeicherten Codesignals verifiziert und bei positiver Verifizierung den Aktor zur Aufhebung der Sperrung ansteuert.

5. Verfahren nach Anspruch 4, wobei ein vom Gehäuse lösbarer Gehäusedeckel (70) mittels eines inneren Sperreingriffs (72) durch das Sperrelement gesperrt wird oder durch eine Gehäuseverschlusskomponente (62"') gesperrt wird, die vom Aktor bewegt wird, um das Gehäuse (20), wenn dieses verschlossen ist, von innen abzuriegeln.

6. Verfahren nach einem der Ansprüche 4 oder 5, wobei die Ansteuerelektronik anhand eines Bewegungs- oder Betätigungssensors eine Bewegung oder Betätigung des Elektrofahrrads erfasst, auf diese Erfassung hin ein Codeanfragesignal auf elektrische Weise, per Funk oder mittels Infrarotübertragung abgibt, ein mobiles Schlüsselelement (90) das Codeanfragesignal erfasst und auf diese Erfassung hin das Codesignal abgibt, das von der Aktoransteuerelektronik (80) empfangen und verifiziert wird, um bei positiver Verifizierung durch Ansteuerung des Aktors mittels der Aktoransteuerelektronik (80) die Sperrung aufzuheben.

## Claims

1. Drive unit configured to drive an electric bicycle or another electromotively operated two-wheeled vehicle, having an electric machine (30), a transmission (40) and a housing (20) which completely encloses the electric machine (30) and the transmission (40), wherein the drive unit (10) comprises a locking mechanism (60-60", 62-62") which is also completely enclosed by the housing (20), wherein the locking mechanism comprises an electric actuator (60-60") and a locking element (62-62") which is connected thereto, is driven by the actuator and is configured to be moved into engagement with a component of the electric machine (30) or of the transmission (40) or of some other drive component (50) within the housing (20) and as a result to lock said component,
**characterized in that**
in the currentless state the actuator (60-60") is configured to provide the locking element (62-62") in engagement with the component of the electric machine (30) or of the transmission (40) or of the other drive components (50), and is also configured to output a signal which represents an actuating state of the locking element (62-62"), and
the drive unit comprises an actuator actuation electronics system (80) which is connected to the actuator (60-60", 60"') and which has a code verification unit (82) which has an electric connection or a radio receiver or IR receiver (84) for inputting a code signal, wherein the actuator actuation electronics system (80) and the code verification unit (82) are completely enclosed by the housing (20).

2. Drive unit according to Claim 1, wherein the housing (20) comprises a housing cover (70) which can be detached from the housing and which has an inner locking engagement means (72), wherein the locking element or a housing closure component (62"') which is driven by the actuator is configured to be moved into engagement with the inner locking engagement means (72) of the housing cover (20), in order to unlock the housing (20) from the inside when said housing (20) is locked.

3. Drive unit according to one of the preceding claims, which also comprises a drive accumulator (100) which is connected to the electric machine (30), wherein the housing (20) completely encloses the drive accumulator (100).

4. Method for locking a drive unit of an electric bicycle, wherein the drive unit (10) is accommodated in a housing (20) which completely encloses said drive unit (10), and when a locking signal is received a locking mechanism which is also accommodated in the housing, a locking element (62-62") of the locking mechanism, driven by an actuator (60-60") of said locking mechanism, is moved into engagement with a component of an electric machine (30) or of a transmission (40) or of another drive component (50) which are part of the drive unit, and the component is detachably locked by the locking mechanism which is placed in engagement therewith,
**characterized in that**
by means of the actuator (60-60") the locking element (62-62") is, in the currentless state of the actuator, in engagement with the component of the electric machine or of the transmission or of the other drive component (50), and locks the component in the currentless state, and wherein the actuator also provides a signal which represents an actuation state of the locking element (62-62"), and
an actuator actuation electronics system (80) which is connected to the actuator (60-60") and is completely enclosed by the housing receives a code signal electrically, by means of radio or by means of infrared transmission, verifies the code signal on the basis of a code signal which is stored in the actuator actuation electronics system (80) or in a code verification unit (82) of the actuator actuation electronics system (80), and in the case of positive verification actuates the actuator to cancel the locking.

5. Method according to Claim 4, wherein a housing cover (70) which can be detached from the housing is locked by the locking element by means of an inner locking engagement means (72) or is locked by a housing closure component (62"') which is moved by the actuator, in order to lock the housing (20) from the inside if said housing (20) is locked.

6. Method according to one of Claims 4 or 5, wherein the actuation electronics detect a movement or activation of the electric bicycle on the basis of a movement sensor or activation sensor, output a code request signal electrically, by radio or by means of infrared transmission, in response to this detection, a mobile key element (90) detects the code request signal, and outputs, in response to this detection, the code signal which is received and verified by the actuator actuation electronics system (80), in order, in the case of positive verification, to cancel the locking by actuating the actuator by means of the actuator actuation electronics system (80).

## Revendications

1. Unité d'entraînement conçue pour entraîner un vélo électrique ou un autre deux roues entraîné par moteur électrique,
l'unité présentant une machine électrique (30), une transmission (40) et un carter (20) qui entoure complètement la machine électrique (30) et la transmission (40),
l'unité d'entraînement (10) comportant un mécanisme de blocage (60-60'', 62-62'') qui est également complètement entouré par le carter (20),
le mécanisme de blocage comprenant un actionneur électrique (60-60'') et un élément de blocage (62-62") relié à l'actionneur et entraîné par ce dernier, l'élément de blocage étant conçu pour être engagé sur un composant de la machine électrique (30), de la transmission (40) ou d'un autre composant d'entraînement (50) prévu à l'intérieur du carter (20) et ainsi les bloquer,
**caractérisée en ce que**
l'actionneur (60-60'') est conçu pour, lorsqu'il n'est pas alimenté en courant, prévoir l'élément de blocage (62-62") en engagement avec le composant de la machine électrique (30), de la transmission (40) ou de l'autre composant d'entraînement (50) et est en outre conçu pour délivrer un signal qui représente l'état d'engagement de l'élément de blocage (62-62") et
**en ce que** l'unité d'entraînement comporte une électronique (80) de commande d'actionneur reliée à l'actionneur (60-60'', 60'''), dotée d'une unité (82) de vérification de code qui présente un raccordement électrique ou un récepteur radio ou IR (84) qui introduit un signal de code, l'électronique (80) de commande d'actionneur et l'unité (82) de vérification de code étant complètement englobées dans le carter (20).

2. Unité d'entraînement selon la revendication 1, dans laquelle le carter (20) comporte un couvercle (70) de carter qui peut être détaché du carter et qui présente un l'engagement intérieur de blocage (72), l'élément de blocage ou un composant (62''') de fermeture de carter entraîné par l'actionneur étant conçus pour être engagés sur l'engagement intérieur de blocage (72) du couvercle (70) de carter pour déverrouiller de l'intérieur le carter (20) lorsque ce dernier est fermé.

3. Unité d'entraînement selon l'une des revendications précédentes, qui comporte en outre un accumulateur d'entraînement (100) relié à la machine électrique (30), le carter (20) entourant complètement l'accumulateur d'entraînement (100).

4. Procédé de blocage de l'unité d'entraînement d'un vélo électrique, l'unité d'entraînement (10) étant placée dans un carter (20) qui l'entoure complètement, et dans lequel lors de la réception d'un signal de fermeture un mécanisme de blocage également placé dans le carter, un élément de blocage (62-62") du mécanisme de blocage, entraîné par un actionneur (60-60") du mécanisme de blocage, est engagé sur un composant de la machine électrique (30), de la transmission (40) ou d'un autre composant d'entraînement (50) qui font partie de l'unité d'entraînement, le composant étant bloqué de manière libérable par le mécanisme de blocage ainsi amené à l'engager,
**caractérisé en ce que**
lorsque l'actionneur n'est pas alimenté en courant, l'élément de blocage (62-62'') est amené par l'actionneur (60-60") à engager le composant de la machine électrique (30), de la transmission (40) ou de l'autre composant d'entraînement (50) et bloque le composant en l'absence de courant, l'actionneur prévoyant en outre un signal qui représente l'état d'engagement de l'élément de blocage (62-62") et
**en ce qu'**une électronique (80) de commande d'actionneur reliée à l'actionneur (60-60") et complètement entourée par le carter reçoit un signal de code de manière électrique, par radio ou par transmission infrarouge, vérifie le signal de code à l'aide d'un signal de code conservé en mémoire dans l'électronique (80) de commande d'actionneur ou une unité (82) de vérification de code de l'électronique (80) de commande d'actionneur et, en cas de résultat positif de la vérification, amène l'actionneur à supprimer le blocage.

5. Procédé selon la revendication 4, dans lequel un couvercle (70) de boîtier apte à être libéré du boîtier est bloqué par l'élément de blocage au moyen d'un engagement intérieur de blocage (72) ou est bloqué par un composant (62''') de fermeture de carter déplacé par l'actionneur pour déverrouiller de l'intérieur le carter (20) lorsque ce dernier est fermé.

6. Procédé selon l'une des revendications 4 ou 5, dans lequel l'électronique de commande saisit à l'aide d'un capteur de déplacement ou d'actionnement un déplacement ou un actionnement du vélo électrique, délivre un signal de demande de code de manière électrique, par radio ou au moyen d'une transmission infrarouge à partir de cette saisie, un élément mobile de serrure (90) saisit le signal de demande de code et à partir de cette saisie délivre un signal de code qui est reçu et vérifié par l'électronique (80) de commande d'actionneur pour supprimer le blocage par commande de l'actionneur au moyen de l'électronique (80) de commande d'actionneur au cas où le résultat de la vérification est positif.
